# EUROPEAN PATENT SPECIFICATION

(11) **EP 0 315 377 B1**
(45) Date of publication and mention of the grant of the patent: **07.12.1994**
(21) Application number: 88310149.5
(22) Date of filing: 28.10.1988
(51) Int. Cl.: G01S 1/24, H04B 14/02

(54) **A Loran-C navigation system**
LORAN-C-Navigationssystem
Système de navigation du type LORAN-C

(30) Priority: 03.11.1987 US 116381; 03.11.1987 US 116461
(43) Date of publication of application: 10.05.1989
(73) Proprietor: MEGAPULSE INCORPORATED, Bedford Massachusetts 01738 (US)
(72) Inventor: Enge, Per, Groton Massachusetts (US)
(74) Representative: Allsop, John Rowland

(56) References cited:
- US-A- 3 921 076
- US-A- 4 423 419
- US-A- 4 482 896
- IEEE PLANS'86 POSITION LOCATION AND NAVIGATION SYMPOSIUM, Las Vegas, Nevada,4th - 7th November 1986, pages 52-60, IEEE, New York, US; P.K. ENGE et al.:"Loran-C communications"
- NAVIGATION, vol. 23, no. 4, winter 1976-1977, pages 279-286, Washington, DC,US; D.A. FELDMAN et al.: "The coast guard two pulse loran-C communications system"

## Description

The present invention relates to the introduction into Loran-C navigational radio broadcast signals and the like of message communication, as in the form of digital data introduced as pulse phase or pulse time modulation into the successive Loran-C pulses constituting the groups that are successively transmitted, for enabling vehicles, ships and the like, to determine their position from the signals and also to receive the communication messages simultaneously broadcast; the invention being more particularly directed to techniques for reducing errors caused by the pulse position modulation introduced upon the successive pulses in the groups of pulses resulting from the Loran-C or other navigation receivers becoming confused into locking onto an erroneous "zero crossing", for navigation purposes, in the light of the modifications introduced by the pulse modulation by the communication message superimposed on the Loran-C groups of pulses; and also being concerned with new techniques for eliminating errors caused not only by the nature of the digital message transmitted but, also, by errors in the navigation determination caused by skywave-introduced offset and fluctuations and the like.

Loran-C transmitting equipment is described, for example, in U.S. Letters Patent Nos. 3,711,725, 4,151,528, 3,889,263, 4,001,598 and 4,423,419, of common assignee herewith. The groups of spaced Loran-C pulse transmissions are received in vehicle location navigation receivers which monitor for a particular zero crossing in the third cycle of the buildup of each Loran pulse of the groups of Loran pulses -- i.e., the sixth zero crossing point. Suitable receiver equipment for such purposes is described, for example, in U.S. Letters Patent Nos. 5,921,076, 3,736,590, 3,774,210, 4,392,138 and 4,482,896.

It has heretofore been proposed, simultaneously with the transmission of Loran-C and similar navigational broadcast signals, to include in the train of navigation signals, modulations on the same carrier that could contain communication messages, as in digital data information form. Among the prior proposals for such operation have been the so-called Clarinet Pilgrim system, used by the U.S. Navy and described by Dean W.N., "Loran-C for Emergency Communications", Maganvox, Fort Wayne, Indiana, September 30, 1973; International Telephone and Telegraph, "Loran-C Phase Modulation Study; Final Technical Report, Volume 1", prepared for the U.S. Coast Guard, June, 1979; Radio Navigation Journal 1975, Wild Goose Association, Acton, Massachusetts, 1975, and "Loran-C Communications", IEEE Plans 186 Position Location and Navigation Symposium, Las Vegas Nevada 1986, pages 52 to 60.

In Clarinet Pilgrim, the first two pulses of the group of eight Loran-C pulses constituting a first group transmission are not modulated; but one or more of pulses three through eight are modulated by moving the pulse back and forth in time intervals of one microsecond -- so-called pulse position modulation. Usually, pseudo-random or plain data is used to modulate the pulse position, but on occasion, a synchronization word may be transmitted. In either event, the data is multiplied by a "bit flip" or inversion sequence or its complement, before it is applied to the pulse position modulation. Indeed, when the first, third or any odd pulse groups is modulated, then the bit flip sequence is 00+-+--+. When the second, fourth or any even pulse group is modulated, then the complement of the bit flip sequence 00-+-++- is used. As an example, assume that the data stream +-+-+-+-+-+- is to be sent by a master station, beginning with a first interval. Pulses three through eight of that interval would be modulated as follows: ++++--, because this sequence is the product of the first part of the data stream and the bit flip sequence. The plus causes a pulse to be advanced by usually one microsecond or a fraction thereof such as 3/4 microsecond, and the minus causes the pulse to be delayed by an identical time. Pulses three through eight of the following interval, or second group of Loran-C pulses would be modulated, for example, ----++. Among the problems with this type of message communication modulation upon the Loran-C navigation transmissions is the fact that at the time of sampling of the third cycle by the receiver monitor, the amplitude of the cycle of the Loran-C pulse is in the process of increasing in magnitude as the onset envelope or buildup of the Loran-C pulse is generated, so that, as later explained, there is a different amplitude of signal at, for example, a one microsecond advance modulation point from the amplitude at the symmetrical one microsecond delay modulation point sampled by the receiver, introducing errors that can confuse the Loran-C receiver in its navigation function as to the actual zero crossing point of the third cycle (or sixth zero crossing point), as before mentioned, or whatever other reference may be selected. Thus, errors in navigation position detection may be introduced by this type of modulation of the transmission to include communication messages.

Thus, if pulse position modulation is used, then the user receiver unavoidably attributes the position (or phase) shift as a shift in its position. The modulation scheme, therefore, must cancel or balance this shift as quickly as possible. Indeed, the receiver is constantly integrating or smoothing the pulse position (or phase) data as described in said receiver patents. The receiver never estimates its position based on a single pulse measurement, and typically integrates data for 1 to 10 seconds. This integration time is known as the receiver time constant. If the pulse position modulation caused by the data can be balanced quickly relative to the receiver time constant, then the data modulation will have negligible effect on the navigation receiver -- the proposed invention providing superior performance in this respect.

As before stated, the invention accounts for the fact that the envelope of the leading edge of the Loran pulse is not constant but rising. The Clarinet Pilgrim and other later-described schemes use symmetric pulse position modulation wherein a "1" causes the pulse to be advanced by exactly T seconds and a "-1" (or binary "0") causes the pulse to be delayed by exactly the same T seconds. The Loran pulse itself, however, is not symmetric about the sampling point, and consequently, the "1" causes the receiver to sample a negative half-cycle position voltage, and the amplitude or magnitude of this voltage is slightly less than the amplitude or magnitude of the positive half-cycle portion voltage which the receiver samples if a "-1" (or binary "0") is sent. Some of the modulation schemes later described guarantee that an equal number of "1"s and "0"s will be sent; but even so, exact balance will not be achieved in the receiver and a bias error in the measured time of signal arrival will result. This time measurement error will be approximately 30 to 200 nanoseconds, and the resulting position error will be 30 to 1,000 feet.

The method underlying the invention reduces this effect by using asymmetric pulse position modulation. A 1 causes the pulse to be advanced by exactly T seconds and the -1 causes the pulse to be delayed by fT seconds where f is smaller than unity, usually approximately equal to about 0.90 to 0.97, a substantial fraction of T.

Similar problems exist with other types of message communication techniques of Loran-C navigation signal transmissions, including the so-called Teletype II system described, for example, in said Radio Navigation Journal article; and in the Coast Guard Two-Pulse Loran-C Communication System also described, for example, in the Radio Navigation Journal, and in Feldman, D.A., et al., "The Coast Guard Two-Pulse Loran-C Communications System", Navigation-The Journal of the Institute of Navigation, Vol. 23, No. 4, 1976-77; also published in the proceedings of the Institute of Navigation National Marine Navigation meeting, Hunt Valley, Maryland, October 14-15, 1975; and in the U.S. Coast Guard High-Speed Communication System similarly described in the Radio Navigation Journal and also in the said International Telephone and Telegraph Report of June 1979; and again the invention herein obviates the navigation error susceptibility of these symmetrical pulse position modulation techniques, as well.

An object of the present invention, accordingly, is to provide a new technique for obviating these kinds of navigational errors caused by the pulse position modulation of Loran-C pulses in the successive groups of transmitted Loran broadcasts; it being an object of the invention to provide a new and improved method of an apparatus (transmitters and receivers) for message communication on Loran-C navigational signal broadcasts with greatly reduced possibility of navigation errors involved in the reception process.

In particular connection with the said United States Coast Guard High Speed Communication System, a technique is introduced through the inversion or "bit flip" for logically multiplying the data-bit message before the data stream pulse-position modulates the transmitter to insure that there is a balance between the plusses and the minuses or +1's and -1's (or binary 0's) of the pulse position modulation sequence, as described in said Radio Navigation Journal article. Even though this Coast Guard system guarantees balance for the ground wave, however, it does not as well guarantee the delayed skywave contribution will be balanced; and that is a principal contribution of the present invention.

In accordance with another feature of the present invention, through the introduction of the concept of balancing a given Loran pulse with a pulse which occurs exactly two pulse groups later and which has identical skywave signal amplitudes at the sampling times as distinguished from the very different skywave amplitudes in successive Loran pulses within a group or within immediately adjacent groups, far greater insurance of accurate navigation locking is attained irrespective of skywave offests and fluctuations and irrespective of the nature of the particular data group sequence that is modulated upon the pulse. (See, also, Pere K. Enge et al., "Loran-C Communications" limited lecture at Proceedings of PLANS '86, published thereafter, where portions only of this operation with its mathematical background are set forth.)

Through a particular kind of encoding of the raw data bits, moreover, there can be greater insurance that the plusses and minuses or +1's and -1's (pulse position modulation advances and delays) are equal and that there is no gross imbalance involved in the modulation within each group; indeed, to provide identical numbers of plus and minus shifts in the first and third and the second and fourth, etc., Loran-C pulses that provide a perfect balance irrespective of the nature of the data in the message, and irrespective of skywave interference.

Another object of the invention, accordingly is to provide a new and improved Loran-C and similar message communication system, in particular of the type similar to the U.S. Coast Guard High Speed Communication System above-mentioned, in which also irrespective of the nature of the incoming digital sequence that is to modulate the signal, the further possibility of navigation errors at the receiver caused by skywave phase offsets and fluctuations is obviated and with protection against strong imbalance within single groups of the Loran-C transmissions in the plus and minus shifts in the modulation, preventing the possibility of a gross shift in one direction.

Other and further objects will be explained hereinafter and are more particularly delineated in the appended claims.

In summary, from one of its important aspects, the invention which is defined in claims 1 and 2 contemplates a method of pulse position modulation of Loran-C pulses that, unlike the symmetrical one microsecond advancing or delaying of successive Loran-C pulses of the prior art, provides for asymmetrically pulse position modulating Loran-C pulses by advancing a pulse an interval greater than the interval of delaying of another pulse affected in the modulation, the difference in the asymmetrical time interval of advancing being an amount sufficient to compensate for the different amplitude or magnitude of the negative and positive cycle portions at the third or reference cycle of the delayed and advanced sampling point cycle position amplitudes being monitored by the receiver at sampling times.

From another of its aspects, the invention embraces in a Loran-C navigation and message communication system in which a plurality of successive Loran-C pulses within successive groups of such pulses are pulse position modulated to communicate blocks of K raw data-bit messages, a method of reducing errors in the reception of said pulses for navigation purposes by receivers which are unaware of the communications, such errors being caused by skywave-introduced phase offsets and fluctuations, and regardless of the nature of the bit messages, said method comprising converting the successive blocks of K raw data bits into respective encoded data of N bit blocks, where N is greater than K, and containing an error-detecting code; applying the respective encoded data blocks to successive Loran-C pulse groups; logically multiplying the successive encoded sequences of the respective first and second Loran-C pulse groups by respective coset leader sequences to produce data sequences that insure against gross imbalance in the plus and minus position modulations within a single group; pulse-position modulating said plurality of pulses in the first and second groups of Loran-C pulses with the respective resulting data sequences; inverting the respective encoded sequences for the first and second Loran-C pulse groups and applying the same, respectively, as the encoded data for the third and fourth Loran-C pulse groups; logically multiplying the same with the said respective coset leader sequences to produce resulting data sequences in the third and fourth Loran-C groups complementary to the respective first and second Loran-C group resulting data sequences and to produce exactly zero imbalance over the four groups; pulse-position modulating the plurality of successive pulses in the third and fourth groups of Loran-C pulses with the corresponding last-named resulting data sequences; and insuring that said coset leader sequences are excluded as a possible code for the converted raw data, whereby identical plus and minus position shifts will occur in the first and third Loran-C pulse groups and identical shifts in the second and fourth Loran-C pulse groups, each in perfect balance irrespective of the nature of the raw data and irrespective of skywave interference, characterised in that the modulation is slightly asymmetric in plus and minus position advance and delay.

Preferred and best mode embodiments and details are hereinafter presented.

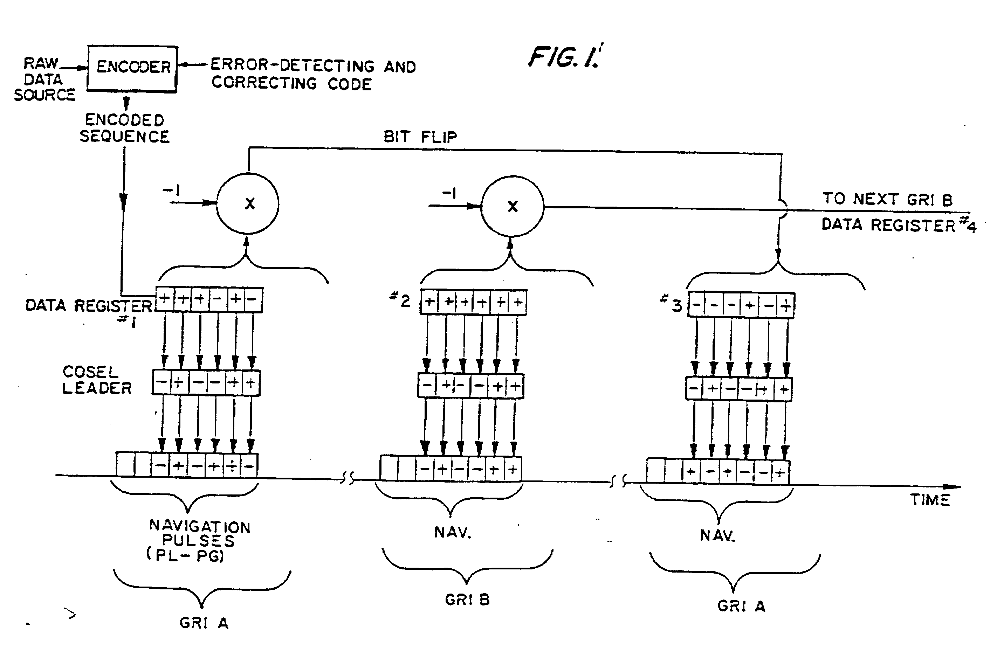

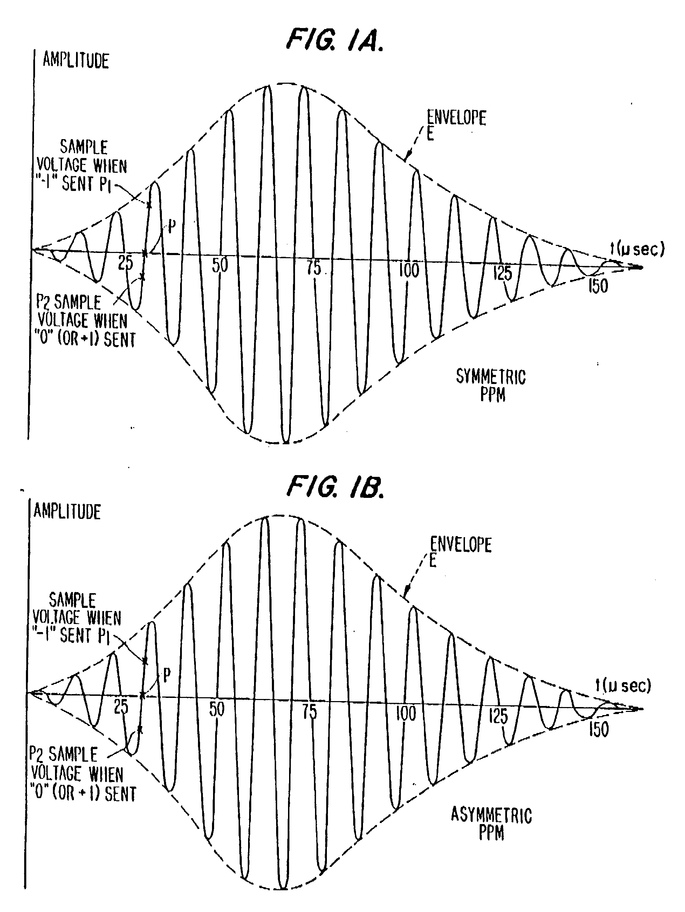

The invention will now be described with reference to the accompanying drawings, Figs 1A and 1B of which are graphs illustrating the points of sampling of successive pulse position modulated Loran-C pulses in accordance with the prior art and in accordance with the present invention, respectively;
Figs 2A and 2B are pulse timing diagrams respectively illustrating the normal pulsing timing of Loran-C transmissions and the modulated pulse timing in accordance with the technique of the present invention;
Fig. 2C is a wave form diagram of the modulated series of Loran-C pulses, the solid-line wave form representing the normal radio-frequency Loran-C pulse, the dotted wave form representing an advanced Loran-C pulse in the communication modulation (advanced by T) and the dash-line wave form, a delayed pulse (delayed by a lesser time period f^{T});
Fig. 3 is a block diagram of a transmitter for operation with the technique of the invention that will product the performance illustrated in Figs. 1B and 2B and 2C;
Fig. 1′ is a block diagram illustrating a preferred system for practicing the additional skywave location error reduction technique feature also underlying the present invention;

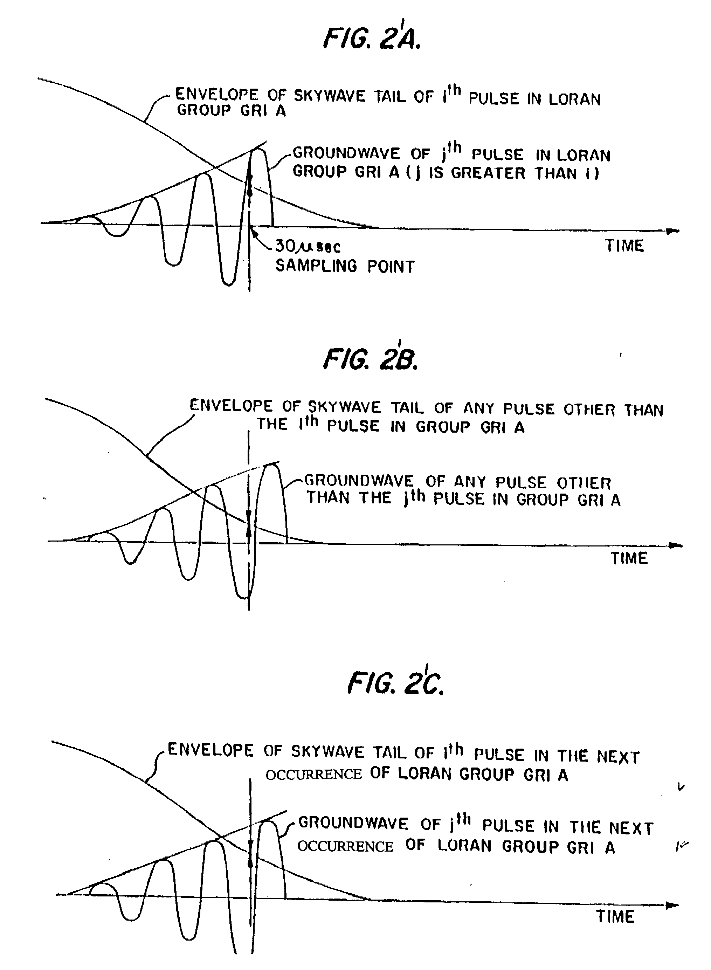

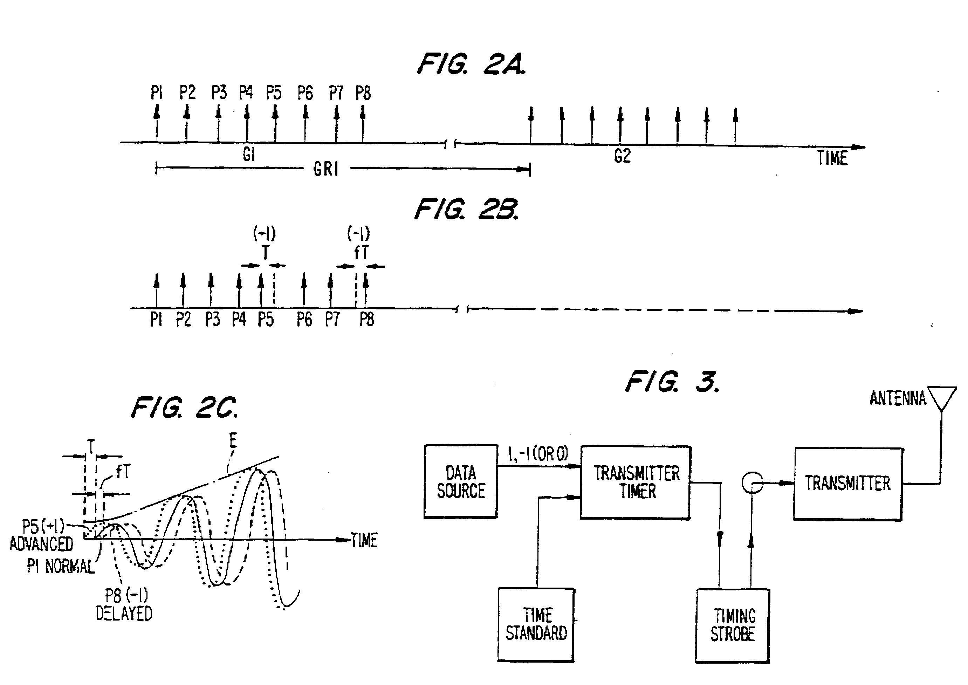

Figs. 2′A, 2′B, and 2′C are waveform diagrams illustrating the operation of the invention in the presence of skywave interference;

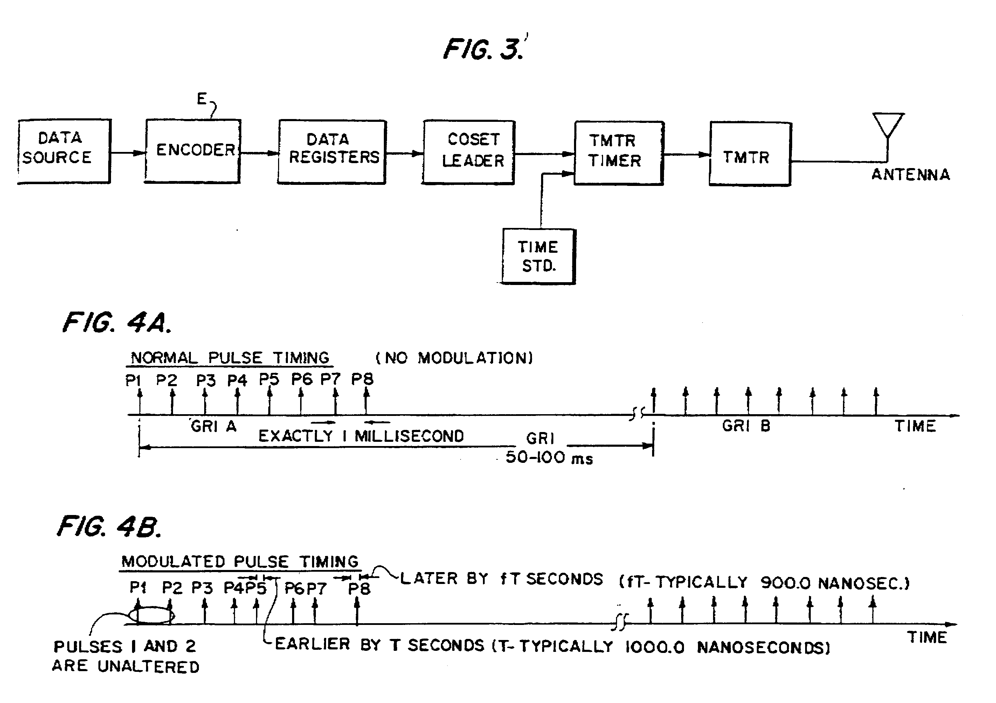

Fig. 3′ is a block diagram of a transmitter adapted to practice the invention;
Figs. 4A and 4B are timing diagrams illustrating normal pulse timing modulation and modulation in accordance with the invention;

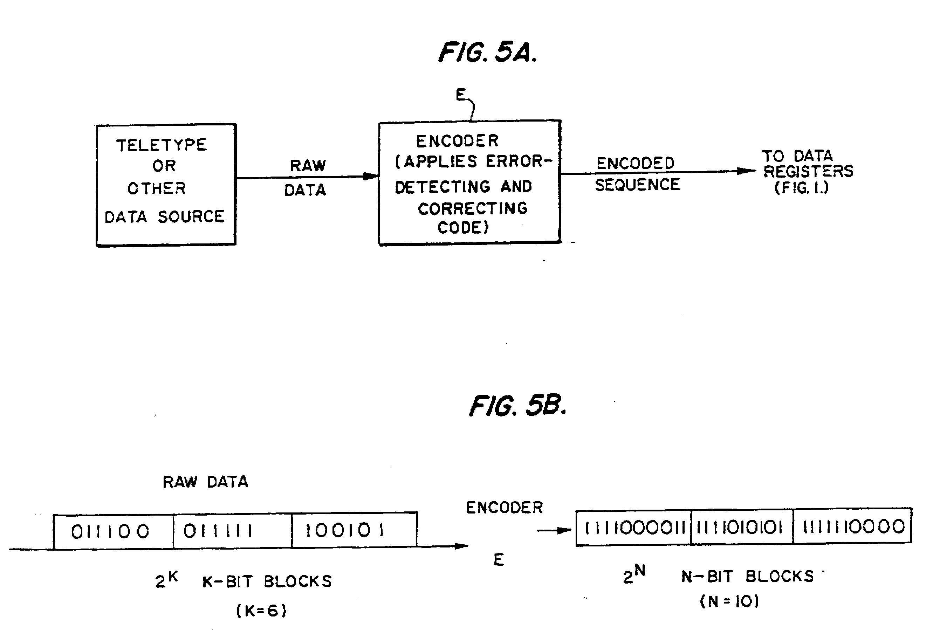

Figs. 5A and 5B are block diagrams illustrating details for the encoder technique used in the transmitter of Fig. 3′;

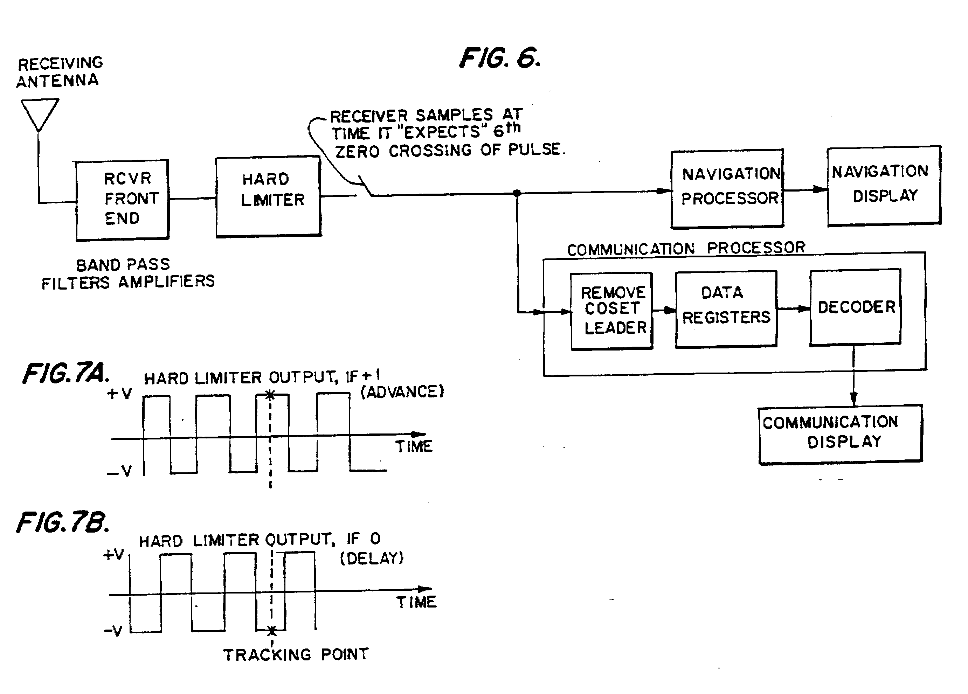

Fig. 6 is a block diagram of a suitable receiver for operation in accordance with the invention; and
Figs. 7A and 7B are wave form diagrams illustrating the operation of the receiver of Fig. 6.

Referring to Fig. 1A, the before-mentioned Loran-C type of rising and falling envelope E is shown formed by the buildup of the successive cycles of the radio frequency burst or pulse and then its tail off, as described in the before-mentioned transmitter patents. The sixth zero crossing point at the third cycle, indicated by the latter P at the thirty microsecond interval along the time or abscissa axis, is the capture point customarily monitored by the receiver for purposes of determining the navigation location of the vehicle containing the receiving equipment, as described in the previously cited receiver patents. The pulse of Fig. 1A is diagramatically shown at P1 in Fig. 2A in arrow form, to illustrate the successively spaced groups, G1, G2, etc. of transmitted Loran-C pulses, the first group G1 having eight pulses (P1-P8) shown successively presented with one millisecond normal (unmodulated) timing position spacing between successive pulses, and the second group G2 similarly having uniform, normal one millisecond spacing between the pulses, but spaced from the earlier group G1 by a group repetition interval (GRI) usually of the order of 50 to 100 milliseconds.

In accordance with the before-mentioned Clarinet Pilgrim system, Teletype II, Coast Guard II Pulse Loran-C Communication System, and U.S. Coast Guard High-Speed Communication prior communication modulation techniques and others suggested, the successive pulses P1, P2, P3, etc., make up the first group G1 and have, as before stated, in normal (unmodulated) pulsing timing, the same one millisecond spacing. This is modified in these prior art modulation systems, generally starting with P3 and going through P8, by introducing the communication message of digital data signals by way of pulse position modulation in the P3 through P8 Loran C pulses. As before explained, these pulses, or some of them, in accordance with the signals, are advanced or delayed to introduce the modulation effect, as more particularly shown in Fig. 2B. The first pulse P5 is shown advanced, and a subsequent pulse P8 is shown delayed to introduce the modulation effect, corresponding to the data message, these being indicated by the numbers 1 and -1, respectively. In terms of binary digits "1" and "0", "1" corresponds to 1 and "0" corresponds to -1. The one microsecond (or sometimes 3/4 microsecond) usual time interval of advance or delay (much less than the 1 millisecond interval between successive Loran-C pulses and also then the period of the radio-frequency cycle of the pulses) results in a greater amplitude or magnitude when a -1 is involved and sampled by the receiver, as shown at point P₁ than on the lower part of the rising third half-cycle at sample point P₂ in Fig. 1A, in view of the rising of the pulse envelope E; this difference in amplitude or magnitude introducing the possibility of the error of the receiver in not finding the appropriate average zero-crossing point P for navigation locking purposes.

In accordance with the present invention, instead of having this symmetrical or standard plus or minus one microsecond (or other) delay and advance as in the prior art, the present invention compensates for the above-mentioned difference in amplitude of the sample point P₁ when a -1 (delay) is involved on the positive portion of the third cycle upswing, and the negative amplitude of less value at P₂ when the sample voltage for the 1 (advance) is involved. Thus the symmetrical pulse position modulation in the prior art is changed, in accordance with the invention, to an asymmetrical pulse position modulation by modifying the time of delay, making it less than the time of advancing to a degree that will compensate for this difference in amplitude, and, in reception, the demodulation will accommodate to recover the original communication data. This is shown in Figs. 2B and 2C wherein the pulse P5 is shown advanced in time by, say, a time T -- the one microsecond; whereas the pulse P8 is delayed or made later by fT seconds, where f, as before explained, is a substantial fraction, such that the delay may be of the order of, say, 900 nanoseconds or 0.9 microsecond to compensate for the greater amplitude of P-to-P₁ as compared with the lesser magnitude P-to-P₂ in Fig. 1A. Under such circumstances, it has been determined that the before-mentioned errors in navigation locking caused by the pulse position modulation in symmetric systems of the prior art is admirably overcome and the receiver, as of the before-mentioned articles, is adjusted in reception separately to demodulate the asymmetric time interval modulation about the sixth zero crossing to recover the original communication data, irrespective of the asymmetry of the modulation intervals.

Thus, in the typical transmitter system of Fig. 3, schematically representing that of the transmitters of before-mentioned prior transmitter patents or referenced articles, the communication data (1, -1 or 0) for modulation of the position of one or more of the Loran-C pulses P3-P8, Fig. 2B, is shown applied at the time-standard-controlled Loran-C pulse timer, which in turn controls a timing strobe that insures the appropriate advancing or delaying of the Loran-C pulse generated by the transmitter and broadcast by the antenna. As before intimated, the receiver will be similarly time-strobed in demodulation to recover the original modulation data.

Turning now to Fig. 1′, at the bottom, three successive groups of eight navigation pulses P1-P8 are shown as blocks GRIA, GRIB, and then GRIA again, etc. Akin to Clarinet Pilgrim, in this embodiment there is no modulation of pulses P1 or P2 of any of the groups. The plurality of pulses P3-P8 that are modulated, are modulated by corresponding six databits shown in the blocks +++-+- at the top, labelled "Data Register #1˝ after they are logically multiplied by a so-called Coset Leader, shown with sequence -+--++ as an example in the left-most GRIA set. Instead of using the first + in the top block of Data Register #1 to pulse-position advance the third pulse P3 of the first navigation group GRIA, that + is first multiplied by the corresponding - of the Coset Leader to get a -; so, in fact, that third pulse P3 is delayed generally of the order of a microsecond. Correspondingly, the data + of the second Data Register #2, times the second Coset Leader +, results in a +, or an advance, say of the order of a microsecond, of the fourth pulse P4 of GRIA; and so on. To anticipate slightly, in accordance with this additional feature of the invention, as more fully explained hereinafter, the databits in Data Register #1 are used not only to modulate pulses of the navigation group GRIA, but also to modulate corresponding pulses of the third navigation group, the next GRIA, as well, after inversion or multiplication by -1, as shown at X.

The Data Registers #1, #2, #3, etc. are filled with data which comes from the encoder E and are filled with plus and minus ones. It is important to observe that whatever data is in Data Register #1, the inverse or the complement is in Data Register #3 in accordance with the invention, and for a later-described purpose. Likewise, whatever is in Data Register #2, its inverse or complement appears in Data Register #4 (not shown, but indicated). The bit flip operations X that appear near the top of the figure effect this inversion.

This bit flip or inversion sequence insures zero imbalance after four GRI's; i.e., that no matter what the nature of the data, over a rather short time embracing four GRI's, there will be as many + (advances) as - (delays) in the communication modulation of the third to eighth Loran-C pulses of each GRI, as described more fully in the said United States Coast Guard High Speed Communication System article. If there was unbalance in + and - modulations over the receiver time constant period (say at least 4GRI's), the navigation receiver may indicate a new shift, either earlier or later, in the arrival of this signal, with a consequent error in position fix. The balancing pulse is exactly two GRI's later than the original pulse, which means that it is identical in a number of important respects to the original pulse, and will have the same phase code.

But an important feature of this phase of the present invention is the use of the Coset Leader to insure, also, that there are no gross imbalances even within a single Loran-C group -- no extreme situations such as nearly all pulses or nearly all minuses. Data Register #1 (+++-+-) does not therefore directly advance, advance, advance, delay, advance and delay. The data, as before explained, is first logically multiplied by the Coset Leader (-+--++, for example) so that the resulting sequence of the pulse position modulation is delay, advance, delay, advance, advance and delay. While this is not a particularly troublesome sequence, such is not the case with the all-plus data in Data Register #2. Instead of advancing every single pulse, the Coset Leader multiplication effects a more random modulation sequence: delay, advance, delay, delay, advance and advance. Consider, however, what would happen if the data register fills with exactly the Coset Leader sequence or its complement. Then, multiplying by the Coset Leader would take a rather random sequence and make it into one of the very troublesome gross imbalances. This is avoided, as later explained, by insuring that the Coset Leader sequence or its complement cannot appear in the data register.

The Coset Leader contributions of the invention thus insure no strong imbalance in modulation advances and delays even within a single Loran-C group.

The scheme of bit-flipping or inverting Data Register #1 used for modulating the first Loran-C group GRIA, so as to provide the complement in the Data Register #3 of the third Loran-C group, and similarly inverting the data of Data Register #2 of the second Loran-C group in Data Register #4 of the fourth Loran-C group insures, moreover, zero imbalance after four groups have been received -- thus eliminating the possibility of the receiver having any substantial navigation position error because of the communication modulation -- but, unlike the said Coast Guard High Speed Communication System, or any other prior systems, does so regardless of delayed Loran-C signal receptions by skywave transmission offsets, fluctuations or other interference, as will now be explained.

Referring to Fig. 2′A, the groundwave-received jth Loran-C pulse in a group is shown together with the tail of the skywave received ith pulse in the group, with the crosses showing the sampled values of the skywave interference. By the above-mentioned bit-flip to the third GRI, it will be noted from Fig. 2′C that the skywave sampled signal will be identical to that in Fig. 2′A (and as distinguished from the very different skywave tail and simpled signal thereon shown for any pulse other than the jth pulse of the first or third groups in Fig. 2′B). This identity is important for the operation of the complementary phase code which, in Loran-C, is used to cancel the effect of skywave signals. Otherwise, the skywave voltages (Figs. 2′A and 2′B) at the sampling points may be non-identical so that proper operation of the complementary code used to cancel skywave cannot be insured, and there may be substantial skywave interference introduced because of the communication modulation that causes these pulses to be advanced and delayed.

Turning, now, to the details of the before-mentioned encoding E of the raw data, Fig. 1′ reference is made to Fig. 5A where the raw communication data, as from a teletype or other data source is applied to the encoder E adapted, in accordance with the invention to apply, to either block or convolutional error-detecting and correcting codes. Such codes and encoders are described in G.C. Clark and J.B. Cain "Error Correcting Codes for Digital Communication", Plenum, New York, 1981; and A.J. Viterbi and J.K. Omura, "Principles of Digital Communication and Coding", McGraw Hill, New York, 1979. As more particularly shown in Fig. 5B, consider a block code with the raw data broken into blocks of K bits for each code, shown as K=6, with illustrative code blocks 011100, 011111 and 100101. The Encoder "maps" each K bit block into an N-bit block, shown as N=10, greater than K, because it is adding (N-K) parity (or error-checking) bits. These N-bit blocks (1111000011, etc.) are called codewords and there is only one for each of the original K-bit raw data blcoks. (A code is a 1-to-1 mapping). Consequently, there are 2^{K} codewords or 64 in this example. However, altogether there are 2^{N} possible N-bit blocks (2¹⁰ or 1,024 in this case). This means 2^{N} - 2^{K} N-bit blocks can never occur. Of the possible 1,024 10-bit blocks that could be appearing in the data registers, none but 64 will appear. Hence, the Coset Leader sequence and its complement, as previously stated, will be selected such that they will never appear in the data registers of Fig. 1′. Multiplication by the Coset Leader sequence, Fig. 1′, will thus insure that no strong imbalances occur in a single group, as earlier described.

A suitable transmitter system for operating in accordance with the method of the invention is shown in Fig. 3′ wherein the data source and encoder E of Figs. 1′ and 5A are shown applying the encoded data of N-bit blocks containing the error-detecting code above described, to the Data Registers (#1, #2, #3, etc. of Fig. 1) of successive Loran-C pulse groups (GRIA, GRIB, GRIA, etc.). The encoded sequences for transmission are multiplied by the Coset Leader sequences to effect logical multiplication that produces respective resulting data sequences that insure against imbalance in the + and - (or 1 and 0) position modulations in the respective Loran-C pulses generated in the radio-frequency transmitter "Tmtr" under control of the time-standard-controlled timer and broadcast from the antenna -- Loran-C navigation pulses simultaneously containing communication data. As earlier stated, preferably the pulse position modulation, representing this data, is effected on pulses P3-P8 with no modulation on the first two Loran-C pulses P1, P2 (Figs. 4A and 4B); and, instead of symmetrical advance and delay time intervals, compensation is made for the different amplitudes at sampling points of the third or captive cycle on the positive and negative sides of the sixth zero crossing used for navigation position determination, caused, as before explained, by the increasing pulse envelope, by advancing a time T, shown on pulse P5, of the order of a microsecond for normally 1 millisecond pulse spacing, Fig. 4A, and delaying (shown on pulse P8) a slightly asymmetric (lesser) time interval fT, about 0.9 to 0.97 microsecond.

While various types of receivers may be used, as described in said patents and articles, Fig. 6 illustrates a suitable receiver of the hard limiter type. The received Loran-C signals are passed through a front end comprising bandpass filters and amplifiers before hard limiting that produces a square waveform that retains phase information -- Fig. 7A illustrating the output for an advance (+1) modulation, and Fig. 7B, a delay or -1 or "0", the tracking sample point being indicated by the crosses representing the expected time of the sixth zero crossing point of the Loran-C pulse. These samples are what the navigation processor, in the normal Loran receiver, receives and monitors, and they will continue to be fed directly into the navigation processor as if the communications did not exist at all; the navigation processor driving the navigation display to determine position. However, these very same receiver samples are also inputted separately to the communication processor which will be concerned with pulses three through eight, because they are the one that are modulated. If the sample is +V, Fig. 7A, it will determine that the pulse has been advanced and corresponds to a +1. If, however, it finds that the sample is equal to -V, Fig. 7B, then it will determine that the pulse was delayed, which corresponds to a -1 or 0. So those + that -1s will then go through a process which is the inverse or reverse of what happened in Fig. 3′, having the effect of removing the Coset Leader sequence and filling a data register for subsequent treatment by a demodulating decoder which performs the inverse mapping from the code words back to the original data; and finally, then, the user will interpret the data as in a display or other read-out.

Thus, in its preferred totality, the invention, through the use of the particular type of encoding described herein, with bit-flip inversion, insures zero imbalance after four Loran-C GRI's, and irrespective of the nature of the input communication data and also regardless of any skywave phase offset or fluctuations or other interference; and with insurance, also, through the Coset Leader sequences, of no strong advance or delay modulation imbalance in even a single group of the Loran-C pulses.

## Claims

1. In a Loran-C navigation and message communication system in which a plurality of successive Loran-C pulses within successive groups of such pulses are pulse position modulated to communicate blocks of K raw data bit messages, a method of reducing errors in the reception of said pulses for navigation purposes in monitoring for a predetermined zero crossing within each successive pulse of each group, such errors being caused by skywave-introduced phase offsets and fluctuations, and regardless of the nature of the bit messages, said method comprising converting the successive blocks of K raw data bits into respective encoded data of N bit blocks, where N is greater than K, and containing an error-detecting code; applying the respective encoded data blocks to successive Loran-C pulse groups; logically multiplying the successive encoded sequences of the first and second Loran-C pulse groups by respective coset leader sequences to produce respective resulting data sequences that insure against strong imbalance in the plus and minus position modulations in any single group of pulses; pulse-position modulating certain of said plurality of pulses in the first and second groups of Loran-C pulses with the respective resulting data sequences; inverting the respective encoded sequences for the first and second Loran-C pulse groups and applying the same, respectively, as the encoded data for the third and fourth Loran-C pulse groups; logically multiplying the same with the said respective coset leader sequences to produce resulting data sequences in the third and fourth Loran-C groups complementary to the respective resulting data sequences of the first and second Loran-C groups; pulse-position modulating certain of the plurality of pulses in the third and fourth groups of Loran-C pulses with the corresponding last-named resulting data sequences; and insuring that said coset leader sequences are excluded as a possible code for the converted raw data, whereby identical plus and minus position shifts will occur in the first and third Loran-C pulse groups and identical shifts in the second and fourth Loran-C pulse groups, each in perfect balance irrespective of the nature of the raw data and irrespective of skywave interference, characterised in that the modulation is slightly asymmetric in plus and minus position advance and delay.

2. A Loran-C navigation and message communication system having, in combination, means for transmitting successive Loran-C pulses within successive groups of such pulses; means for pulse-position modulating certain of the pulses within each group to communication blocks of K raw data bit messages; encoder means for converting the successive blocks of K raw data bits into respective encoded data N bit blocks, where N is greater than K, and containing an error-detecting code; means for applying the respective encoded data blocks to data registers representing successive Loran-C pulse groups; coset leader means for logically multiplying the data in the data registers with coset leader sequences to produce respective resulting data sequences that insure against strong imbalance in plus and minus position modulations in any single group of pulses; means for pulse-position modulating certain of the said plurality of successive pulses in the first and second groups of Loran-C pulses with the respective resulting data sequences; means for inverting the respective encoded sequences for the first and second Loran-C pulse groups and applying the same respectively as the encoded data for the data registers of the third and fourth Loran-C pulse groups, respectively: means for logically multiplying the same with the coset leader sequences to produce resulting data sequences complementary to the respective first and second resulting data sequences: means for pulse-position modulating certain of the plurality of successive pulses in the third and fourth groups of Loran-C pulses with the respective last-named resulting data sequences; and means associated with the encoder means for insuring that said coset leader sequence is excluded as a possible code for the converted raw data, whereby identical plus and minus pulse position shifts will occur in the first and third and second and fourth Loran-C pulse groups in perfect balance, irrespective of the nature of the raw data and irrespective of skywave interference, characterised in that the plus and minus modulations are adjusted to be slightly asymmetric in plus and minus position advance and delay.

3. A Loran-C system as claimed in claim 2 and in which said certain pulses are the third through eighth pulses of each group.

4. In a Loran-C navigation and message communication system employing the method of claim 1, receiving the Loran-C pulses and processing the said predetermined zero crossing times to provide navigation position; and separately monitoring the modulated pulses, processing the same to remove the said coset leader code logical multiplication therefrom, and demodulating and decoding the data to recover the original message data.

5. In a Loran-C navigation and message communication network employing the system of claim 2, means for receiving the Loran-C pulses and processing the said predetermined zero cross times to provide navigation position; and means for separately processing the modulated pulses including means for removing the said coset leader logical multiplication therefrom and means for demodulating and decoding the data to recover the original message.

## Patentansprüche

1. In einem Loran-C-Navigations- und Nachrichten-Kommunikationssystem, in welchem eine Vielzahl von aufeinanderfolgenden Loran-C-Impulsen in von aufeinanderfolgenden Gruppen solcher Impulse in der Impulslage bzw. in der Phase moduliert werden, um unaufbereitete Nachrichtenblöcke oder Rohdaten mit K Datenbits zu erzeugen, wobei bei einem Verfahren zur Reduzierung von Fehlern beim Empfang solcher Impulse für Navigationszwecke in der Beobauchtung eines vorbestimmten Nulldurchgangs innerhalb jedes aufeinanderfolgenden Impulses jeder Gruppe, und zwar von Fehler, die aus raumwellenbedingten Phasenverschiebungen und Schwankungen resultieren, und auch unabhängig von der Natur der Bit-Nachrichten, eine Umwandlung der aufeinanderfolgenden unaufbereiteten Blöcke mit K Datenbits in entsprechende, codierte Blöcke mit N Bits erfolgt, bei denen N größer ist als K und die einen Fehlererkennungscode enthalten, die entsprechenden codierten Datenblöcken auf die aufeinanderfolgenden Loran-C-Impulsgruppen angewandt werden, eine logische Multiplikation der aufeinanderfolgenden codierten Sequenzen der ersten und zweiten Loran-C-Impulsgruppen mit entsprechenden Leader-Sequenzen erfolgt, um entsprechende resultierende Datensequenzen zu erzeugen, die Sicherheit gegen starke Abweichungen bei der Plus- und Minus-Position der Modulation in jeder einzelnen Gruppe von Impulses leisten, bestimmte Impulse aus der Vielzahl der Impulse in der ersten und zweiten Gruppe der Loran- C-Impulse mit den entsprechenden, resultierenden Datensequenzen in der Impulslage bzw. Phasenlage moduliert werden, eine Invertierung der entsprechenden codierten Folgen für die ersten und zweiten Loran-C-Impulsgruppen erfolgt und diese dann als codierte Daten auf die dritte und vierte Loran-C-Impulsgruppen angewandt werden, diese mit den entsprechenden Leader-Sequenzen logisch multipliziert werden, um resultierende Daten-Sequenzen in den dritten und vierten Loran-C-Impulsgruppen zu erhalten, und zwar komplementär zu den entsprechenden resultierenden Daten-Sequenzen der ersten und zweiten Loran-C-Gruppen, bestimmte Impulse der Vielzahl der Impulse in der dritten und vierten Gruppe von Loran-C-Impulsen mit den entsprechenden letztgenannten resultierenden Datenfrequenzen in der Impulslage moduliert werden und sichergestellt wird, daß die Leader-Sequenzen als möglicher Code für die umgewandelten Rohdaten ausgenommen sind, wobei identische Plus- und Minus-Positionsänderungen in den ersten und dritten Loran-C-Impulsgruppen und identische Änderungen in den zweiten und vierten Loran-C-Impulsgruppen auftreten, jeweils perfekt ausgeglichen und unabhängig von der Natur der Rohdaten und unabhängig von Raumwellenstörungen, **dadurch gekennzeichnet**, daß die Modulation geringfügig asymmetrisch bezüglich der positiven und negativen voreilenden und nacheilenden Position oder Phasenlage ist.

2. Ein Loran-C-Navigations- und Nachrichten-Kommunikations system, welches in Kombination aufweist, Mittel zur Übertragung von aufeinanderfolgenden Loran-C-Impulsen in von aufeinanderfolgenden Gruppen solcher Impulse, Mittel für eine Impulslage- bzw. Phasen-Modulation von bestimmten Impulsen innerhalb jeder Gruppe, um unaufbereitete Nachrichtenblöcke oder Rohdaten mit K Bits zu erzeugen, Codiermittel, um die aufeinanderfolgenden unaufbereiteten K-Bit Daten in entsprechende codierte Blöcke mit N-Bit umzuwandeln, wobei N größer ist als K und diese einen Code zur Erkennung von Fehlern aufweisen, Mittel zur Zuführung der entsprechenden codierten Datenblöcke an Datenregister, die aufeinanderfolgende Loran-C-Impulsgruppen representieren, zugeordnete Leadermittel für eine logische Multiplikation der Daten in den Registern mit zugeordneten Leader-Sequenzen, um entsprechende resultierende Daten-Sequenzen zu erzeugen, die Sicherheit gegen starke Abweichungen in Plus- und Minus-Position-Modulationen in jeder einzelnen Gruppe von Impulsen liefern, Mittel für eine Impulsposition-Modulation von bestimmten aus der Vielzahl von aufeinanderfolgenden Impulsen der ersten und zweiten Gruppe der Loran-C-Impulsen mit den entsprechenden resultierenden Datensequenzen, Mittel für die Invertierung der entsprechenden codierten Sequenzen für die erste und zweite Loran-C-Impulsgruppen und für das Zuführen dieser als codierte Daten an die Datenregister der dritten und vierten Loran-Impulsgruppen, Mittel für eine logische Multiplikation dieser mit den zugeordneten Leader-Sequenzen, um resultierende Daten-Sequenzen zu erzeugen, und zwar komplementär zu den entsprechenden ersten und zweiten resultierenden Daten-Sequenzen, Mittel für eine Impulsposition- bzw. Phasen-Modulation von bestimmten aus der Vielzahl der aufeinanderfolgenden Impulse in der dritten und vierten Gruppe der Loran-C-Impulse mit den entsprechenden, letztgenannten resultierenden Daten-Sequenzen, und Mittel, die den Codiermittel zugeordnet sind, um sicherzustellen, daß die zugeordnete Leader-Sequenz als Möglichkeit eines Codes für die umgewandelten Rohdaten ausscheidet, wobei identische Plus- und Minus-Impulspositions-Verschiebungen in den ersten und dritten sowie zweiten und vierten Loran-C-Impulsgruppen jeweils in perfekter Ausgeglichenheit auftreten, und zwar unabhängig von der Natur der Rohdaten und unabhängig von Raumwellenstörungen, **dadurch gekennzeichnet**, daß die Plus- und Minus-Modulationen etwas asymmetrisch bezüglich der positiven und negativen voreilenden und nacheilenden Position oder Phasenlage eingestellt sind.

3. Ein Loran-C-System nach Anspruch 2, bei dem die erwähnten gewissen Impulse die dritten bis achten Impulse jeder Gruppe sind.

4. In einem Loran-C-Navigations- und Nachrichten-Kommunikationssystem, welches das Verfahren nach Anspruch 1 verwendet, dadurch gekennzeichnet, daß das System die Loran-C-Impulse empfängt und die erwähnten vorbestimmten Null-Durchgangszeiten verarbeitet, um Navigations-Positionen zu erhalten, und wobei das System separat die modulierten Impulse überwacht, diese verarbeitet, um die logische Multiplikation mit dem erwähnten zugeordneten Leader-Code zu entfernen, und wobei das System die Daten demodulilert und decodiert, um die Original-Nachrichtendaten zu erhalten.

5. In einem Loran-C-Navigations- und Nachrichten-Kommunikationsnetzwerk, welches das System des Anspruches 2 verwendet, gekennzeichnet durch Mittel zum Empfang der Loran-C-Impulse und zur Verarbeitung der erwähnten vorbestimmten Null-Durchgangszeiten, um Navigations-Positionen zu erhalten, sowie durch Mittel für die separate Verarbeitung der modulierten Impulse, mit Mitteln zum Entfernen der logischen Multiplikation mit dem zugeordneten Leader und mit Mitteln zur Demodulation und Decodierung der Daten, um die originale Nachricht zu erhalten.

## Revendications

1. Système de transmission de messages et de navigation du type Loran-C où une pluralité d'impulsions Loran-C successives appartenant à des groupes successifs de ces impulsions sont modulées en position d'impulsion pour trasmettre des blocks de K messages de bits de données brutes, un procédé de réduction des erreurs dans la réception desdites impulsions servant à la navigation, comprend la surveillance d'un passage par zero, prédéreminé dans chaque impulsion successive de chaque groupe, de telles erreurs étant créées par des décalages et des fluctuations de phase introduits par l'onde ionosphérique, et quelle que soit la nature des messages en bits, ledit procédé consistant à convertir les blocs successifs de Kbits de données brutes en données codées correspondantes de N blocs de bits, avec N supérieur a K, qui contiennent un code de détection d'erreur ; appliquer les blocs de données codées respectives aux groupes successifs d'impulsions Loran-C à multiplier logiquement les séquences codées successives du premier et du second groupes d'impulsions Loran-C par des séquences d'amorce respectives déterminées pour créer des séquences respectives de données résultantes qui garantissent contre un fort déséquilibre dans les modulations positives ou négatives de position à l'intérieur d'un seul groupe d'impulsions, à moduler par position d'impulsions, certaines impulsions parmi ladite pluralité d'impulsions du premier et du second groupes des impulsions Loran-C par les séquences respectives de données résultantes ; inverser les séquences codées respectives du premier et du second groupes d'impulsions Loran-C et à appliquer ces groupes respectivement, comme données codées pour le deuxième et le troisième groupes d'impulsions Loran-C, à multiplier logiquement ces groupes par lesdites séquences d'amorce respectives co-définies afin de former, dans le troisième et le quatrième groupes Loran-C, des séquences de données résultantes complémentaires des séquences respectives de données résultantes des premier et second groupes Loran-C ; moduler en position d'impulsions certaines parmi la pluralité des impulsions des troisiéme et quatrième groupes d'impulsions Loran-C par les dernières nommées des séquences de données résultantes correspondantes ; et à s'assurer que lesdites séquences d'amorce définies sont exclues comme code possible des données brutes converties, grâce à quoi des décalages de position identiques en plus et en moins se produiront dans le premier et le troisième groupes d'impulsions Loran-C et des décalages identiques se produiront dans le second et quatrième groupes d'impulsions Loran-C, chacun étant en parfait équilibre, quelle que soit la nature des données brutes et quelle que soit l'interférence due à l'onde ionosphérique, caractérisé en ce que la modulation est légerement dissymétrique en avance et retard de position en plus et en moins.

2. Système de transmission de messages et de navigation de type Loran-C, ayant en combinaison, des moyens pour transmettre des impulsions Loran-C successives dans des groupes successifs de ces impulsions des moyens pour moduler en position d'impulsion certaines des imulsions de chaque groupe pour transmettre des blocs de K messages de bits de données brutes ; des moyens de codeur pour convertir les blocs successifs de K bits de données brutes en blocs correspandants de N bits de données codées, N étant plus grand que K, contenant un code de détection d'erreur ; des moyens pour appliquer les blocs respectifs de données codées à des registres de données représentant des groupes successifs d'impulsions Loran-C ; des moyens d'amorces co-définis pour produire des séquences de données résultantes respectives qui garantissent contre un important déséquilibre des modulations de position en plus et en moins dans un seul groupe quelconque d'impulsions ; des moyens pour moduler en position certaines parmi ladite pluralité d'impulsions successives dans le premier et le second groupes d'impulsions Loran-C par les séquences respectives de données résultantes ; des moyens pour inverser les séquences codées respectives des premier et second qroupes d'impulsions Loran-C et pour appliquer ces mêmes séquences, respectivement, comme données codées destinées aux registres de données des troisième et quatrième groupes respectifs d'impulsions Loran-C ; des moyens pour multiplier logiquement ces mêmes séquences par les sequences d'amorce co-définies afin de produire des séquences de données résultantes complémentaires des première et seconde séquences respectives de données résultantes ; des moyens pour moduler en position d'impulsion certaines de la pluralité des impulsions successives du troisième et du quatriéme groupes d'impulsions Loran-C par les dernières nommées des séquences de données résultantes, respectives et des moyens associés aux moyens codeurs pour garantir que ladite séquence d'amorce co-définie est exclue d'une utilisation comme code possible pour les données brutes converties, de façon que des décalages identiques de positions d'impulsions en plus et en moins apparaissent dans le premier et le troisième et dans le second et le quatrième des groupes d'impulsions Loran-C en parfait équilibre, quelle que soit la nature des données brutes et quelle que soit l'interférence de l'onde ionosphérique, caractérisé en ce que les modulations en plus et en moins sont ajustées pour être légèrement dissymétriques en avance et retard de position en plus et en moins.

3. Système Loran-C selon la revendication 2 et dans lequel certaines desdites impulsions sont les troisième à huitième de chaque groupe.

4. Système de transmission de messages et de navigation Loran-C, employant le procédé de la revendication 1, recevant les impulsions Loran-C et traitant lesdits instants prédéterminés de passage par zéro pour obtenir la position de navigation et surveillant séparément les impulsions modulées, le traitement de ces impulsions pour en retirer ladite multiplication logique dudit code d'amorce co-défini puis la démodulation et le décodage des données pour rétablir les données du message original.

5. Réseau de transmission de messages et de navigation Loran-C, employant le système de la revendication 2, des moyens pour recevoir les impulsions Loran-C et traiter lesdits instants prédéterminés de passage par zéro pour obtenir la position de navigation, et des moyens pour traiter separément les impulsions modulées comprenant des moyens pour en retirer ladite multiplication logique de ladite amorce co-définie et des moyens pour démoduler et décoder les données afin de rétablir le message original.
